(19) **Europäisches Patentamt**
**European Patent Office**
**Office européen des brevets**

(11) **EP 1 959 626 B1**

(12) **EUROPEAN PATENT SPECIFICATION**

(45) Date of publication and mention
of the grant of the patent:
**21.01.2009 Bulletin 2009/04**

(51) Int Cl.:
*H04L 27/26* $^{(2006.01)}$     *H04B 1/10* $^{(2006.01)}$

(21) Application number: **07003160.4**

(22) Date of filing: **14.02.2007**

(54) **Receiver apparatus, transmitter apparatus and communication system for detecting a narrowband interference in a multi-carrier receiver signal**

Empfängergerät, Sendegerät und Kommunikationssystem zur Erfassung von Schmalbandinterferenz in einem Mehrträgerempfangssignal

Appareil de réception, appareil de transmetteur et système de communication pour détecter une interférence à bande étroite dans un signal de récepteur multiporteur

(84) Designated Contracting States:
**DE GB**

(43) Date of publication of application:
**20.08.2008 Bulletin 2008/34**

(73) Proprietor: **NTT DoCoMo Inc.**
**Chiyoda-ku**
**Tokyo 100-6150 (JP)**

(72) Inventors:
- **Morelli, Michele**
**56012 Fornacette**
**Pisa (IT)**
- **Moretti, Marco**
**50122 Firenze (IT)**
- **Mazzoni, Tiziano**
**50050 Cerreto Guidi**
**(FI) (IT)**
- **Cosovic, Ivan**
**80339 Munich (DE)**

(74) Representative: **Stöckeler, Ferdinand et al**
**Schoppe, Zimmermann,**
**Stöckeler & Zinkler**
**Postfach 246**
**82043 Pullach bei München (DE)**

(56) References cited:
**WO-A-20/04015946**     **US-A1- 2006 133 259**

- ZHANG D ET AL: "Receiver window design for narrowband interference suppression in IEEE 802.11a system" COMMUNICATIONS, 2004 AND THE 5TH INTERNATIONAL SYMPOSIUM ON MULTI-DIMENSIONAL MOBILE COMMUNICATIONS PROCEEDINGS. THE 2004 JOINT CONFERENCE OF THE 10TH ASIA-PACIFIC CONFERENCE ON BEIJING, CHINA 29 AUG.-1 SEPT. 2004, PISCATAWAY, NJ, USA, IEEE, US, 29 August 2004 (2004-08-29), pages 839-842, XP010765081 ISBN: 0-7803-8601-9

**Description**

The present invention is in the field of multi-carrier dynamic spectrum sharing systems and particularly in narrowband interference detection in shared spectrum data transmission.

Multi-carrier dynamic spectrum sharing (DySS = Dynamic Spectrum Sharing) systems derive their denomination from the fact that they operate over a wide bandwidth where other narrowband services can be active. Especially OFDM-systems (OFDM = Orthogonal Frequency Domain Multiplexing) can use non-contiguous groups of subcarriers in an interfered spectrum. In particular, unmodulated, or also called virtual, subcarriers will be placed over those frequency intervals occupied by narrowband communication systems so as to limit any possible interference to a tolerable level. Additionally, in license exempt bands even active OFDM subcarriers can be affected by interference from other signals, for example from Bluetooth. Possibly strong narrowband interference (NBI = Narrowband Interference) within the signal spectrum complicates considerably the synchronization task of a receiver.

Generally, all OFDM systems that exploit synchronization preambles for synchronization purposes and frequency correction purposes are affected by the harmful influence of narrowband signals, for example, in the case of spectrum sharing systems. This is in particular disadvantageous as spectrum sharing is considered to play a significant role in the future of wireless systems, as for example in fourth generation systems (4G = fourth generation). Since bandwidth is a scarce resource, these systems have to find a way to establish successful ways to cope with possible in-band interference, as the number of active wireless systems is steadily increasing.

The effect of strong NBI is such that the common approach of using a dedicated training block composed by several repeated parts for timing and frequency acquisition experiences significant degradations in a spectrum sharing system. The disadvantage of conventional systems is therefore, that the synchronization and frequency-correcting task of any receiver suffers from narrowband interference, implying lowered overall system performance.

WO 2004/15946 A1 discloses a method and a system for use in a wireless-local-area network, for example, utilizing OFDM, for simultaneously estimating the unknown multi-path channel and noise characteristics by using channel and noise estimates to improve the system performance in the presence of narrowband interferers. Estimates are provided for the unknown multi-path channel and noise characteristic without a-priori knowledge of the location of the interference in the band and this information is used to generate soft-metrics for a Viterbi decoder. Channel and noise estimates can be determined with a higher accuracy, the packet error rate of, for example, a WLAN system may be maintained, despite collisions with interfering packets, increasing the robustness towards narrowband interference.

Zhang D. et al: "Receiver window design for narrowband interference suppression in IEEE 802.11a system", Communications, 2004 and the 5th International Symposium on Multi-dimensional mobile communications proceedings, The 2004 joint conference of the 10th Asia Pacific conference in Beijing, China, 29 Aug.-1 Sept., 2004, Piscataway, NJ, USA, IEEE, US, 29 August 2004 (2004-08-29), pages 839-842, XP010765081, ISBN: 0-7803-8601-9 discloses an OFDM system, for example, in terms of the IEEE 802.11a standard where the Fourier transform is used in demodulation. A known effect of this system is the so-called "spectral leakage" in discrete Fourier transform, where narrowband interference can be spread in the spectrum and strongly impact adjacent sub-channels. Conventional concepts, for example, proposed receive window functions to suppress narrowband interference spreading OFDM systems. The authors propose usage of a Hanning window used with an IEEE 802.11a preamble and the physical layer frame to improve channel estimation. Window selection for data reception based on measurements of window wireless environments is also investigated. The authors demonstrate that channel estimation can be improved by using windowing with WLAN preambles.

It is the object of the present invention to provide a concept to efficiently detect narrowband interference in order to enable narrowband interference reduction.

The object is achieved by a receiver apparatus according to claim 1, a transmitter apparatus according to claim 15, and a communication system according to claim 22.

The object is achieved by a receiver apparatus for detecting a narrowband interference in a multi-carrier receive signal, the multi-carrier receive signal being comprised of a plurality of subcarriers and having a structure of sequential time frames. The receiver apparatus comprises a means for transforming a first composed receive signal, which is based on a first transmit signal having subcarriers with a predefined amplitude, to the frequency domain to obtain a first composed receive signal spectrum and for transforming a second composed receive signal, which is based on the first transmit signal to the frequency domain to obtain a second composed receive signal spectrum, the first and second composed receive signals being composed of multi-carrier receive signals. The receiver apparatus further comprises a means for detecting narrowband interference by comparing a spectral difference between the first composed receive signal spectrum and the second composed receive signal spectrum or a shifted version of the second composed receive signal spectrum to a detection threshold and the receiver apparatus further comprises a means for cancelling a subcarrier in the first or the second composed receive signal spectrum if the intensity of the subcarrier of the spectral difference is above the detection threshold.

The object is further achieved by a transmitter apparatus for transmitting multi-carrier signals being comprised of a plurality of sub-carriers. The transmitter apparatus comprises a means for composing a first spectrum having sub-carriers with a predefined amplitude and for composing a second spectrum being a shifted or cyclically shifted version of the first spectrum. The transmitter apparatus further comprises a means for transforming the first and the second spectrum to the time domain to obtain a first and a second interference detection signal and a means for transmitting the first and the second interference detection signals.

The object is further achieved by a communication system comprising a receiver apparatus and a transmitter apparatus according to the above description.

The present invention is based on the finding that narrowband interference can be detected, by transmitting a specially designed transmit signal preamble. According to embodiments, the preamble is composed of two parts, wherein the spectrum of one part can be identical or a shifted version of the other. At the receiver the two parts are received and transformed to the frequency domain. By back-shifting the shifted spectrum in case of a shifted versions and determining the difference between the two resulting spectra, the signal parts based on the intended subcarriers cancel each other out, respectively can be reduced significantly. However, if interference is superimposed to either one of the signals, the shifted versions of the interference do not cancel each other and can thus be detected easily. In case of identical parts of the preamble no back-shifting is necessary and the difference between the two spectra of the two parts of the preamble can be determined directly. The interference can be detected if phase or amplitude variations of the interference occur in the receive signals of the two identical parts of the preamble. Embodiments of the present invention therefore provide the advantage that they can detect narrowband interference and therewith enable better time synchronization, better frequency offset compensation and consequently a better system performance.

Detailed embodiments of the present invention are described utilizing the accompanying figures, in which

Fig. 1a      shows an embodiment of a receiver apparatus;

Fig. 1b      shows an embodiment of a transmitter apparatus;

Fig. 1c      shows a block diagram of an embodiment of a receiver apparatus;

Fig. 2      shows a preamble structure of a WINNER frame;

Fig. 3a-d      illustrate an embodiment a narrowband interference estimation; and

Fig. 4      illustrates simulation results of bit error rates versus different values of carrier frequency offsets.

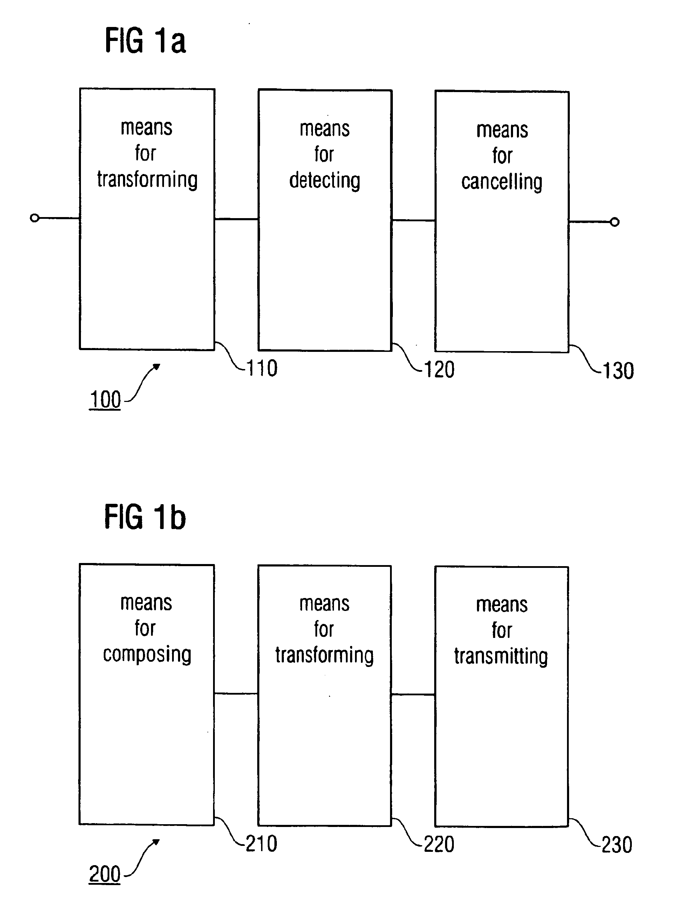

Fig. 1a shows an embodiment of a receiver apparatus 100 for detecting a narrowband interference in a multi-carrier receive signal, the multi-carrier receive signal being comprised of a plurality of subcarriers and having a structure of sequential time frames. The receiver apparatus 100 comprises a means 110 for transforming a first composed receive signal, which is based on a first transmit signal having subcarriers with a predefined amplitude, to the frequency domain to obtain a first composed receive signal spectrum and for transforming a second composed receive signal, which is based on the first transmit signal, to the frequency domain to obtain a second composed receive signal spectrum, the first and second composed receive signals being composed of multi-carrier receive signals. The receiver apparatus 100 further comprises a means 120 for detecting narrowband interference by comparing a spectral difference between the first composed receive signal spectrum and the second composed receive signal spectrum or a shifted version of the second composed receive signal spectrum to a detection threshold. The receiver apparatus 100 further comprises a means 130 for cancelling a subcarrier in the first or the second composed receive signal spectrum if the intensity of the subcarrier of the spectral difference is above the detection threshold.

Embodiments of the receiver apparatus 100 may further comprise a means for transforming the first or second composed receive signal spectrum with cancelled subcarriers to the time domain to obtain a first or second composed receive signal with reduced narrowband interference. In another embodiment the first and second composed receive signals are based on a transmit sequence of an OFDM system (OFDM = Orthogonal Frequency Division Multiplexing). In another embodiment the first and second composed received signals are based on a first and second transmit signal spectrum, wherein the second transmit signal spectrum is a shifted or cyclically shifted version of the first transmit signal spectrum. In another embodiment, the first and the second composed received signals are based on a first and second transmit signal, each having a duration of one and a half time frames. In another embodiment, the first and the second composed receive signals are based on a first and a second receive signal further having zero amplitude subcarriers.

In another embodiment the receiver apparatus 100 can be adapted for detecting narrowband interference in OFDM receive signals. The OFDM receive signals may be IEEE 802.11 or WINNER (WINNER = Wireless World Initiative New Radio) conform signals. In another embodiment the receiver apparatus 100 further comprises a means for time synchronizing on the first or second composed receive signal with cancelled subcarriers. Furthermore, the receiver apparatus 100 may comprise a means for estimating a frequency offset based on the first or second composed receive signal with cancelled subcarriers. The means for cancelling subcarriers may further be adapted for cancelling subcarriers within a frequency range around a frequency of a subcarrier, which's intensity is above the detection threshold. Moreover, in one embodiment the means for cancelling subcarriers may be adapted for cancelling subcarriers in a frequency range wherein the frequency range spans across two or more consecutive subcarriers.

Fig. 1b shows an embodiment of a transmitter apparatus 200, for transmitting multi-carrier signals being comprised of a plurality of subcarriers. The transmitter apparatus 200 comprises a means 210 for composing a first spectrum having subcarriers with a predefined amplitude and for composing a second spectrum being a shifted or cyclically shifted version of the first spectrum. The transmitter apparatus 200 further comprises a means 220 for transforming the first and the second spectrum to the time domain to obtain a first and a second interference detection signal. The transmitter apparatus 200 further comprises a means 230 for transmitting the first and the second interference detection signals.

In one embodiment of the transceiver apparatus 200, the means 210 for composing is adapted for composing OFDM signals, the means 220 for transforming is adapted for transforming OFDM signals and the means for transmitting 230 is adapted for transmitting OFDM signals. The OFDM signals may be signals according to the IEEE 802.11 or WINNER specifications.

Moreover, in embodiments of the transmitter apparatus 200, the means 230 for transmitting may be adapted for transmitting signals in a sequential frame structure and the first and the second interference detection signals may each have a duration of one and a half time frames. Furthermore, the first and the second spectra may comprise zero amplitude subcarriers.

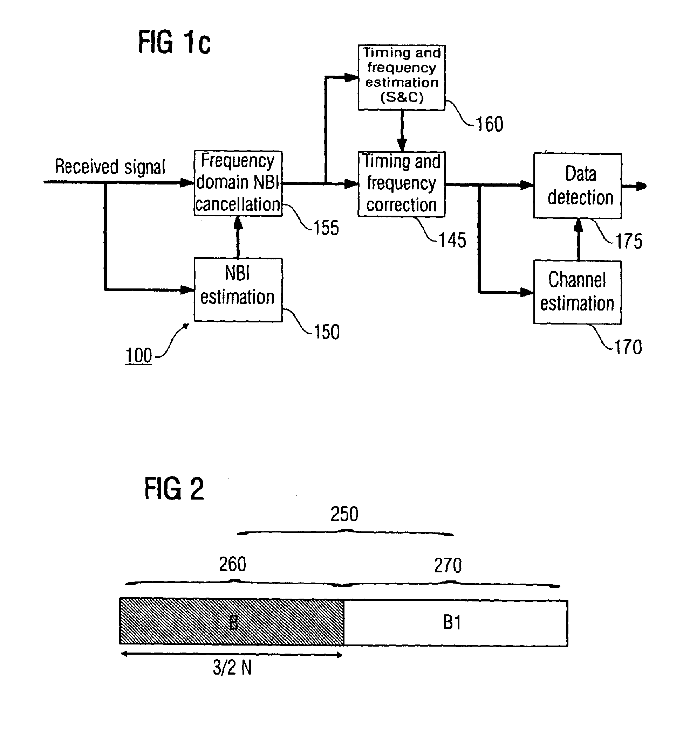

Fig. 1c shows a block diagram of an embodiment of a receiver apparatus 100. The receive signal undergoes the narrowband interference estimation 150 as described above. The narrowband interference can then be cancelled by the narrowband interference canceller 155 in the frequency domain. Based on the signal with the reduced narrowband interference, a timing and frequency estimator 160 can provide timing and frequency corrections to a timing and frequency corrector 165. Once the timing and frequency is corrected a channel estimator 170 can estimate the radio channel and provide a channel estimate to a data detector 175, which finally detects the data. Fig. 1c shows a conceptional embodiment of a receiver apparatus 100 for any multi-carrier system. After the narrowband interference has been estimated and suppressed, timing and frequency estimation can be performed using standard algorithms, for example by means of a Schmidl and Cox (S&C = Schmidl and Cox) algorithm.

In the following a WINNER scenario where the desired signal spans 100 MHz bandwidth and the number of subcarriers is 2048 is considered for simulation purposes in order to illuminate the advantages of embodiments of the present invention. Fig. 2 shows a structure of a WINNER preamble 250, which is composed of a first block 260 and a second block 270. Each of the two blocks 260 and 270 has a length of 3/2N symbols.

The preamble block 250 is composed of 3N time domain symbols and it is used to estimate and cancel NBI sources. After NBI sources have been detected in an NBI estimation phase and the interfered sub-carriers have been set to zero in an NBI cancellation phase, the virtually interference-free time domain samples of the preamble can be fed to a timing synchronization and carrier frequency offset estimation unit. The preamble structure is represented in Fig. 2 and it is divided in two half blocks of size 3/2N symbols each. The first half block 260 contains the sequence $\{b(n)\}$ ($n=1,...,3/2N$) and the second half block 270 contains the sequence $\{b_1(n)\}$($n=1,...3/2N$), which is a replica of $b(n)$ rotated by a frequency corresponding to the subcarrier spacing $\Delta f = 1/NT$, i.e.

$$b_1(n) = b(n)e^{j\frac{2\pi n}{N}} . \tag{1}$$

Thus, indicating with $s(n)$ the tds (tds = time domain sample) transmitted in the preamble, it is

$$s(n) = \begin{cases} b(n) & n = 1,..., \dfrac{3}{2}N \\ b_1(n - \dfrac{3N}{2}) & n = \dfrac{3}{2}N + 1,..., 3N. \end{cases} \tag{2}$$

The NBI estimation algorithm relies on the specific structure of the preamble, which has been built to make the NBI estimation algorithm robust to frame-synchronization errors $\theta$ up to $N/2$. The preamble is grouped in two N-dimensional blocks $\mathbf{r}=[r(1),..., r(N)]^T$ and $\mathbf{r}^{(1)}=[r(1+3/2N),..., r(N+3/2N)]^T$. Assuming that $\theta<N/2$, both vectors contain only tds of the preamble block of the desired signal and thus it is

$$r(n) = x_\theta(n) + i(n) , \qquad (3)$$

where $x_\theta(n) = \sum_{\ell=0}^{L-1} h(\ell)s(n - \ell - \theta)$ is the desired signal after being filtered by the channel $h(n)$ of length L samples and $i(n)$ represents the interference. Neglecting noise and carrier frequency offset, $R(m)$, the m-th outcome of the DFT of $\mathbf{r}$, is

$$R(m) = H(m)S_\theta(m) + I(m) \qquad (4)$$

and $R^{(1)}(m)$, the m-th outcome of the DFT of $\mathbf{r}^{(1)}$, is

$$R^{(1)}(m) = H(m)S_\theta^{(1)}(m) + I^{(1)}(m) \qquad (5)$$

where $S_\theta^{(1)}(m)$ is the m-th output of the DFT of the vector $s_\theta = \left[s(1-\theta),...,s(N-\theta)\right]^T, S_\theta^{(1)}(m)$ is the m-th output of the DFT of the vector $s_\theta^{(1)} = \left[s(1 + 3/2N - \theta),...,s(N + 3/2N - \theta)\right]^T$, and $I(m)$ and $I^{(1)}(m)$ are the DFT of the NBI in the two vectors.

Since the preamble is built with two sequences that are rotated with respect to each other of a frequency equal to the sub-carrier spacing, there is a shift or cyclic shift of a position between $S_\theta(m)$ and $S_\theta^{(1)}(m)$, i.e.

$$S_\theta^{(1)}(m) = S_\theta(m-1) , \qquad (6)$$

this property can be exploited to reveal the presence of NBI. The metric $\Lambda(m) = R(m) - R^{(1)}(m-1)$ is

$$\Lambda(m) = S_\theta(m)(H(m) - H(m-1)) + I(m) - I^{(1)}(m-1) . \qquad (7)$$

Assuming that the channel does not exhibit sensible variations between adjacent sub-carriers, i.e. $H(m) \approx H(m-1)$, the desired signal is cancelled and

$$\Lambda(m) \approx I(m) - I^{(1)}(m-1) . \qquad (8)$$

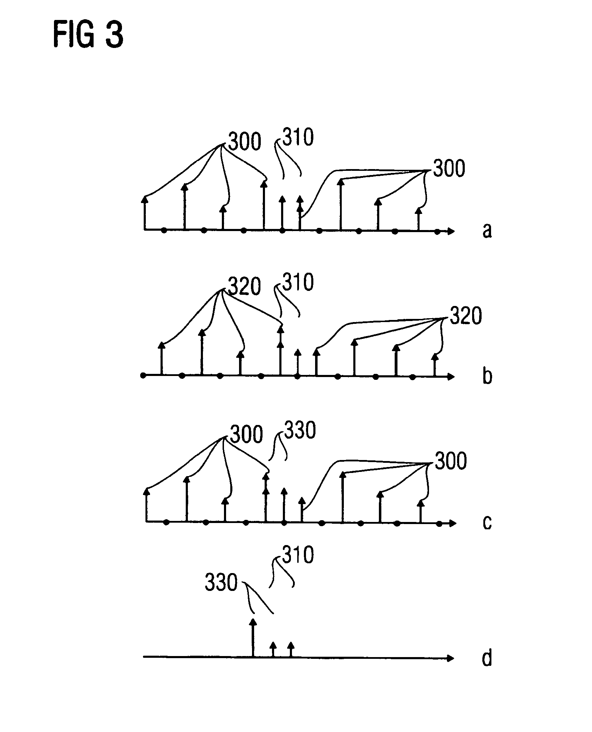

Thus in the following $|\Lambda(m)|^2$ can be compared with an adequate threshold $P_{th}$ to detect the presence of NBI. Figs. 3a-d illustrate the NBI estimation algorithm. Figs. 3a-d show an embodiment of a determination of narrowband interference. Fig. 3a depicts a first spectrum wherein a number of subcarriers 300 are utilized with predefined amplitudes. Furthermore, Fig. 3a shows two subcarriers 310, which correspond to narrowband interference. Fig. 3b shows the received spectrum of a second received block with shifted or cyclically shifted subcarriers 320. The spectrum depicted in Fig. 3b shows the same narrowband interference 310 as depicted in Fig. 3a. In order to determine the narrowband interference 310 the spectrum depicted in Fig. 3b is shifted by one subcarrier spacing and the spectrum depicted in Fig. 3c is obtained. Fig. 3c shows the same intended subcarriers 300 as depicted in Fig. 3a, which are a shifted or cyclically shifted version of those in Fig. 3b, however, the narrowband interference 330 is a shifted version. Evaluating the difference of the spectra of Fig. 3a and Fig. 3c eliminates all subcarriers 300 with predefined amplitudes and leaves an incoherent superposition of the narrowband interference as depicted in Fig. 3d. Based on Fig. 3d the narrowband interference can be concluded.

Embodiments provide the advantage that in presence of carrier frequency offsets $v>0.2/NT$ its performance is still stable and does not detoriate. The embodiment presented for the WINNER scenario has to cope with larger offsets and can be easily adapted to be very robust to any frequency offset. The effect of a frequency offset $v$ is a fixed phase

rotation $\phi = 2\pi \dfrac{3}{2} v$ between corresponding elements of the vectors $s_\theta$ and $s_\theta{}^{(1)}$. Thus being the DFT a linear operator, this fixed rotation phase translates also on $\boldsymbol{s}_\theta$ and $\boldsymbol{s}_\theta{}^{(1)}$ and it is

$$S_\theta{}^{(1)} = S_\theta(m-1)e^{-j\phi} \qquad (9)$$

Therefore, to remove the effect of the phase offset $\phi$, the metric $\Lambda(m)$ is modified to

$$\Lambda(m) \doteq \left| R(m) \right| - \left| R^{(1)}(m-1) \right| \qquad (10)$$

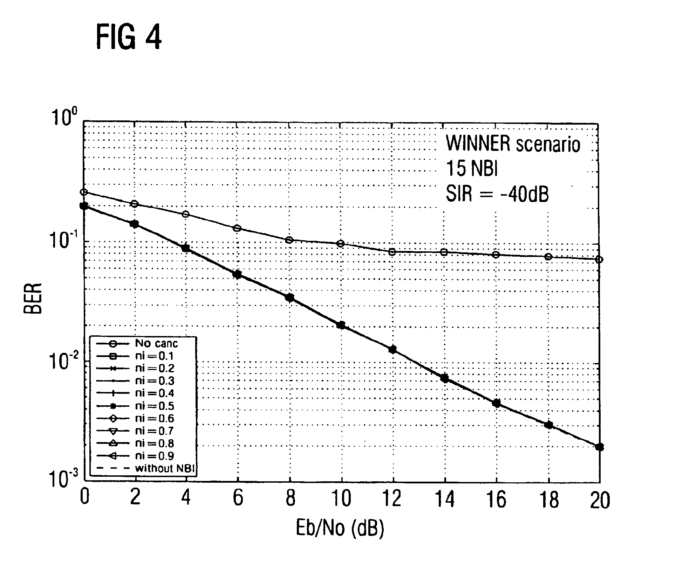

From Fig. 3 it is clear that the NBI estimation algorithm tends to detect the presence of interference also on the sub-carriers adjacent to those where the NBI actually is. Therefore, the NBI cancellation algorithm will remove a number of sub-carriers slightly greater than what is effectively needed, but this effect is compensated by the large number of sub-carriers as e.g. in a WINNER scenario and impacts on the system performance are negligible. Fig. 4 shows a view graph of simulation results of bit error rates versus bit energy over noise power densities for different frequency offsets v. It can be seen that no performance degradation occurs for values of $v=0.1...0.9$ pointing out the advantage of embodiments of the present invention.

Depending on certain implementation requirements of the inventive methods, the inventive methods can be implemented in hardware or in software. The implementation can be performed using a digital storage medium, in particular a disc, DVD or a CD having electronically readable control signals stored thereon, which cooperate with a programmable computer system such that the inventive methods are performed. Generally, the present invention is, therefore, a computer program product with a program code stored on a machine-readable carrier, the program code being operative for performing the inventive methods when the computer program runs on a computer. In other words, the inventive methods are, therefore, a computer program having a program code for performing at least one of the inventive methods when a computer program runs on a computer.

List of Reference Signs

| | |
|---|---|
| 100 | Receiver apparatus |
| 110 | Means for transforming |
| 120 | Means for detecting |
| 130 | Means for cancelling |
| | |
| 150 | Narrowband interference estimator |
| 155 | Narrowband interference canceller |
| 160 | Timing and frequency estimator |
| 165 | Timing and frequency corrector |
| 170 | Channel estimator |
| 175 | Data detector |
| | |
| 200 | Transmitter apparatus |
| 210 | Means for composing |
| 220 | Means for transforming |

230    Means for transmitting

250    WINNER preamble
260    First block
270    Second block

300    Subcarriers with predefined amplitudes
310    Narrowband interference
320    Subcarriers with predefined amplitudes
330    Shifted narrowband interference

**Claims**

1. Receiver apparatus (100) for detecting narrowband interference in a multi-carrier receive signal, the multi-carrier receive signal being comprised of a plurality of subcarriers and having a structure of sequential time frames, the receiver apparatus (100) comprising:

a means (110) for transforming a first composed receive signal which is based on a first transmit signal having subcarriers with a predefined amplitude, to the frequency domain to obtain a first composed receive signal spectrum and for transforming a second composed receive signal, which is based on the first transmit signal, to the frequency domain to obtain a second composed receive signal spectrum, the first and second composed receive signals being composed of multi-carrier receive signals;

a means (120) for detecting narrowband interference by comparing a spectral difference between the first composed receive signal spectrum and the second composed receive signal spectrum or a shifted version of the second composed receive signal spectrum to a detection threshold; and

a means (130) for cancelling a subcarrier in the first or second composed receive signal spectrum if the intensity of the subcarrier of the spectral difference is above the detection threshold.

2. Receiver apparatus (100) of claim 1, further comprising a means for transforming the first or second composed receive signal spectrum with cancelled subcarriers to the time domain and to obtain a composed receive signal with reduced narrowband interference.

3. The receiver apparatus (100) of one of the claims 1 or 2, wherein the means (110) for transforming is adapted for transforming first or second composed receive signals which are based on a transmit sequence of an OFDM system.

4. Receiver apparatus (100) of one of the claims 1 to 3, wherein the means (110) for transforming is adapted for transforming first and second composed receive signals which are based on a first and a second transmit signal spectrum, wherein the second transmit signal spectrum is a shifted or cyclically shifted version of the first transmit signal spectrum.

5. Receiver apparatus (100) of one of the claims 1 to 4, wherein the means (110) for transforming is adapted for transforming first and second composed received signals which are based on a first and a second transmit signal, each having a duration of one and a half time frames.

6. Receiver apparatus (100) of one of the claims 1 to 5, wherein the means (110) for transforming is adapted for transforming first and second composed receive signals which are based on a first and a second transmit signal having zero amplitude subcarriers.

7. Receiver apparatus (100) of one of the claims 1 to 6 being adapted for detecting narrowband interference in OFDM received signals.

8. Receiver apparatus (100) of one of the claims 1 to 7, further comprising a means for time synchronizing on the first or second composed receive signal with cancelled subcarriers.

9. Receiver apparatus (100) of one of the claims 1 to 8, further comprising a means for estimating a frequency offset based on the first or second composed receive signals with cancelled subcarriers.

**10.** Receiver apparatus (100) of one of the claims 1 to 9, wherein the means (130) for cancelling subcarriers is further adapted for cancelling subcarriers within a frequency range around a frequency of a subcarrier, which's intensity is above the detection threshold.

**11.** Receiver apparatus (100) of claim 10, wherein the frequency range spans two or more consecutive subcarriers.

**12.** Method for detecting narrowband interference in a multi-carrier receive signal, the multi-carrier receive signal being comprised of a plurality of subcarriers and having a structure of sequential time frames, comprising the steps of:

   transforming a first composed receive signal, which is based on a first transmit signal having subcarriers with a predefined amplitude, to the frequency domain to obtain a first composed receive signal spectrum, and for transforming a second composed receive signal, which is based on the first transmit signal, to the frequency domain to obtain a second composed receive signal spectrum, the first and second composed receive signals being composed of multi-carrier receive signals;
   detecting narrowband interference by comparing a spectral difference between the first composed receive signal spectrum and the second composed receive signal spectrum or a shifted version of the second composed receive signal spectrum to a detection threshold; and
   cancelling a subcarrier in the first or second composed receive signal spectrum if the intensity of the subcarrier of the spectral difference is above the detection threshold.

**13.** Computer program having a program code for performing the method of claim 12, when the computer program runs on a computer.

**14.** Transmitter apparatus (200) for transmitting multi-carrier signals being comprised of a plurality of subcarriers, comprising:

   a means (210) for composing a first spectrum having subcarriers with a predefined amplitude and for composing a second spectrum being a shifted or cyclically shifted version of the first spectrum;
   a means (220) for transforming the first and the second spectrum to the time domain to obtain a first and a second signal; and
   a means (230) for transmitting the first and the second signal.

**15.** Transmitter apparatus (200) of claim 14, wherein the means (210) for composing is adapted for composing OFDM signals, the means (220) for transforming is adapted for transforming OFDM signals, and the means (230) for transmitting is adapted for transmitting OFDM signals.

**16.** Transmitter apparatus (200) of one of the claims 13 to 15, wherein the means (230) for transmitting a subcarrier is adapted for transmitting signals in a sequential frame structure and wherein the first and the second interference detection signals each having a duration of one and a half time frames.

**17.** Transmitter apparatus (200) of one of the claims 13 to 16, wherein the first and the second spectra comprise zero amplitude subcarriers.

**18.** Method for transmitting multi-carrier signals being comprised of a plurality of subcarriers, comprising the steps of:

   composing a first spectrum having subcarriers with a predefined amplitude and for composing a second spectrum being a shifted or cyclically shifted version of the first spectrum;
   transforming the first and the second spectrum to the time domain to obtain a first and a second signal; and
   transmitting the first and the second signal.

**19.** Computer program having a program code for performing the method according to claim 18, when the program code runs on a computer.

**20.** Communication system comprising a receiver apparatus (100) according to one of the claims 1 to 11, and a transmitter apparatus (200) according to one of the claims 14 to 17.

**EP 1 959 626 B1**

**Patentansprüche**

1. Empfängervorrichtung (100) zum Erfassen von Schmalbandinterferenz in einem Mehrträgerempfangssignal, wobei das Mehrträgerempfangssignal aus einer Mehrzahl von Unterträgern besteht und eine Struktur von sequentiellen Zeitrahmen aufweist, wobei die Empfängervorrichtung (100) folgende Merkmale umfasst:

   eine Einrichtung (110) zum Transformieren eines ersten zusammengesetzten Empfangssignals, das auf einem ersten Sendesignal basiert, das Unterträger mit einer vordefinierten Amplitude aufweist, in den Frequenzbereich, um ein erstes zusammengesetztes Empfangssignalspektrum zu erhalten, und zum Transformieren eines zweiten zusammengesetzten Empfangssignals, das auf dem ersten Sendesignal basiert, in den Frequenzbereich, um ein zweites zusammengesetztes Empfangssignalspektrum zu erhalten, wobei das erste und das zweite zusammengesetzte Empfangssignal aus Mehrträgerempfangssignalen zusammengesetzt sind;
   eine Einrichtung (120) zum Erfassen von Schmalbandinterferenz durch Vergleichen einer spektralen Differenz zwischen dem ersten zusammengesetzten Empfangssignalspektrum und dem zweiten zusammengesetzten Empfangssignalspektrum oder einer verschobenen Version des zweiten zusammengesetzten Empfangssignalspektrums mit einem Erfassungsschwellenwert; und
   eine Einrichtung (130) zum Aufheben eines Unterträgers in dem ersten oder zweiten zusammengesetzten Empfangssignalspektrum, falls die Intensität des Unterträgers der spektralen Differenz über dem erfassten Schwellenwert liegt.

2. Empfängervorrichtung (100) gemäß Anspruch 1, die ferner eine Einrichtung zum Transformieren des ersten oder des zweiten zusammengesetzten Empfangssignalspektrums mit aufgehobenen Unterträgern in den Zeitbereich umfasst, um ein zusammengesetztes Empfangssignal mit reduzierter Schmalbandinterferenz zu erhalten.

3. Die Empfängervorrichtung (100) gemäß einem der Ansprüche 1 oder 2, bei der die Einrichtung (110) zum Transformieren angepasst ist zum Transformieren eines ersten oder eines zweiten zusammengesetzten Empfangssignals, die auf einer Sendesequenz eines OFDM-Systems basieren.

4. Empfängervorrichtung (100) gemäß einem der Ansprüche 1 bis 3, bei der die Einrichtung (110) zum Transformieren angepasst ist zum Transformieren eines ersten und eines zweiten zusammengesetzten Empfangssignals, die auf einem ersten und einem zweiten Sendesignalspektrum basieren, wobei das zweite Sendesignalspektrum eine verschobene oder zyklisch verschobene Version des ersten Sendesignalspektrums ist.

5. Empfängervorrichtung (100) gemäß einem der Ansprüche 1 bis 4, bei der die Einrichtung (110) zum Transformieren angepasst ist zum Transformieren eines ersten und eines zweiten zusammengesetzten Empfangssignals, die auf einem ersten und einem zweiten Sendesignal basieren, die jeweils eine Dauer von eineinhalb Zeitrahmen aufweisen.

6. Empfängervorrichtung (100) gemäß einem der Ansprüche 1 bis 5, bei der die Einrichtung (110) zum Transformieren angepasst ist zum Transformieren eines ersten und eines zweiten zusammengesetzten Empfangssignals, die auf einem ersten und einem zweiten Sendesignal basieren, die Null-Amplitude-Unterträger aufweisen.

7. Empfängervorrichtung (100) gemäß einem der Ansprüche 1 bis 6, die angepasst ist zum Erfassen von Schmalbandinterferenz in OFDM-Empfangssignalen.

8. Empfängervorrichtung (100) gemäß einem der Ansprüche 1 bis 7, die ferner eine Einrichtung umfasst zum Zeitsynchronisieren auf dem ersten oder zweiten zusammengesetzten Empfangssignal mit aufgehobenen Unterträgern.

9. Empfängervorrichtung (100) gemäß einem der Ansprüche 1 bis 8, die ferner eine Einrichtung umfasst zum Schätzen eines Frequenzversatzes basierend auf dem ersten oder zweiten zusammengesetzten Empfangssignal mit aufgehobenen Unterträgern.

10. Empfängervorrichtung (100) gemäß einem der Ansprüche 1 bis 9, bei der die Einrichtung (130) zum Aufheben von Unterträgern ferner angepasst ist zum Aufheben von Unterträgern in einem Frequenzbereich um eine Frequenz eines Unterträgers herum, deren Intensität über dem Erfassungsschwellenwert liegt.

11. Empfängervorrichtung (100) gemäß Anspruch 10, bei der der Frequenzbereich zwei oder mehr aufeinanderfolgende Unterträger umspannt.

**12.** Verfahren zum Erfassen von Schmalbandinterferenz in einem Mehrträgerempfangssignal, wobei das Mehrträgerempfangssignal aus einer Mehrzahl von Unterträgern besteht und eine Struktur von sequentiellen Zeitrahmen aufweist, das folgende Schritte umfasst:

Transformieren eines ersten zusammengesetzten Empfangssignals, das auf einem ersten Sendesignal basiert, das Unterträger mit einer vordefinierten Amplitude aufweist, in den Frequenzbereich, um ein erstes zusammengesetztes Empfangssignalspektrum zu erhalten, und zum Transformieren eines zweiten zusammengesetzten Empfangssignals, das auf dem ersten Sendesignal basiert, in den Frequenzbereich, um ein zweites zusammengesetztes Empfangssignalspektrum zu erhalten, wobei das erste und das zweite zusammengesetzte Empfangssignal aus Mehrträgerempfangssignalen zusammengesetzt sind;

Erfassen von Schmalbandinterferenz durch Vergleichen einer spektralen Differenz zwischen dem ersten zusammengesetzten Empfangssignalspektrum und dem zweiten zusammengesetzten Empfangssignalspektrum oder einer verschobenen Version des zweiten zusammengesetzten Empfangssignalspektrums mit einem Erfassungsschwellenwert; und

Aufheben eines Unterträgers in dem ersten oder zweiten zusammengesetzten Empfangssignalspektrum, falls die Intensität des Unterträgers der spektralen Differenz über dem Erfassungsschwellenwert liegt.

**13.** Computerprogramm mit einem Programmcode zum Durchführen des Verfahrens gemäß Anspruch 12, wenn das Computerprogramm auf einem Computer läuft.

**14.** Sendervorrichtung (200) zum Senden von Mehrträgersignalen, die aus einer Mehrzahl von Unterträgern bestehen, die folgende Merkmale umfasst:

eine Einrichtung (210) zum Zusammensetzen eines ersten Spektrums, das Unterträger mit einer vordefinierten Amplitude aufweist, und zum Zusammensetzen eines zweiten Spektrums, das eine verschobene oder zyklisch verschobene Version des ersten Spektrums ist;

eine Einrichtung (220) zum Transformieren des ersten und des zweiten Spektrums in den Zeitbereich, um ein erstes und ein zweites Signal zu erhalten; und

eine Einrichtung (230) zum Senden des ersten und des zweiten Signals.

**15.** Sendervorrichtung (200) gemäß Anspruch 14, bei der die Einrichtung (210) zum Zusammensetzen angepasst ist zum Zusammensetzen von OFDM-Signalen, die Einrichtung (220) zum Transformieren angepasst ist zum Transformieren von OFDM-Signalen, und die Einrichtung (230) zum Senden angepasst ist zum Senden von OFDM-Signalen.

**16.** Sendervorrichtung (200) gemäß einem der Ansprüche 13 bis 15, bei der die Einrichtung (230) zum Senden eines Unterträgers angepasst ist zum Senden von Signalen in einer sequentiellen Rahmenstruktur, und bei der das erste und das zweite Interferenzerfassungssignal jeweils eine Dauer von eineinhalb Zeitrahmen aufweisen.

**17.** Sendervorrichtung (200) gemäß einem der Ansprüche 13 bis 16, bei der das erste und das zweite Spektrum Null-Amplitude-Unterträger umfassen.

**18.** Verfahren zum Senden von Mehrträgersignalen, die aus einer Mehrzahl von Unterträgern bestehen, das folgende Schritte umfasst:

Zusammensetzen eines ersten Spektrums, das Unterträger mit einer vordefinierten Amplitude aufweist, und zum Zusammensetzen eines zweiten Spektrums, das eine verschobene oder zyklisch verschobene Version des ersten Spektrums ist;

Transformieren des ersten und des zweiten Spektrums in den Zeitbereich, um ein erstes und ein zweites Signal zu erhalten; und

Senden des ersten und des zweiten Signals.

**19.** Computerprogramm mit einem Programmcode zum Durchführen des Verfahrens gemäß Anspruch 18, wenn der Programmcode auf einem Computer läuft.

**20.** Kommunikationssystem, das eine Empfängervorrichtung (100) gemäß einem der Ansprüche 1 bis 11 und eine Sendervorrichtung (200) gemäß einem der Ansprüche 14 bis 17 umfasst.

**Revendications**

1. Appareil de réception (100) pour détecter une interférence à bande étroite dans un signal de réception à porteuses multiples, le signal de réception à porteuses multiples étant composé d'une pluralité de sous-porteuses et présentant une structure de trames séquentielles dans le temps, l'appareil de réception (100) comprenant:

   un moyen (110) destiné à transformer un premier signal de réception composé, qui est basé sur un premier signal d'émission présentant des sous-porteuses d'amplitude prédéfinie, au domaine de la fréquence, pour obtenir un premier spectre de signal de réception composé et à transformer un deuxième signal de réception composé, qui est basé sur le premier signal d'émission, au domaine de la fréquence, pour obtenir un deuxième spectre de signal de réception composé, les premier et deuxième signaux de réception composés se composant de signaux de réception à porteuses multiples;
   un moyen (120) destiné à détecter une interférence à bande étroite en comparant une différence spectrale entre le premier spectre de signal de réception composé et le deuxième spectre de signal de réception composé ou une version décalée du deuxième spectre de signal de réception composé avec un seuil de détection; et
   un moyen (130) destiné à annuler une sous-porteuse dans le premier ou le deuxième spectre de signal de réception composé si l'intensité de la sous-porteuse de la différence spectrale est au-dessus du seuil de détection.

2. Appareil de réception (100) selon la revendication 1, comprenant par ailleurs un moyen destiné à transformer le premier ou le deuxième spectre de signal de réception composé à sous-porteuses annulées au domaine du temps et à obtenir un signal de réception composé à interférence à bande étroite réduite.

3. Appareil de réception (100) selon l'une des revendications 1 ou 2, dans lequel le moyen (110) destiné à transformer est adapté pour transformer les premier ou deuxième signaux de réception composés qui sont basés sur une séquence de transmission d'un système OFDM.

4. Appareil de réception (100) selon l'une des revendications 1 à 3, dans lequel le moyen (110) destiné à transformer est adapté pour transformer les premier et deuxième signaux de réception composés qui sont basés sur un premier et un deuxième spectre de signal d'émission, dans lequel le deuxième spectre de signal d'émission est une version décalée ou cycliquement décalée du premier spectre de signal d'émission.

5. Appareil de réception (100) selon l'une des revendications 1 à 4, dans lequel le moyen (110) destiné à transformer est adapté pour transformer les premier et deuxième signaux de réception composés qui sont basés sur un premier et un deuxième signal d'émission, ayant chacun une durée d'une trame et demie dans le temps.

6. Appareil de réception (100) selon l'une des revendications 1 à 5, dans lequel le moyen (110) destiné transformer est adapté pour transformer les premier et deuxième signaux de réception composés qui sont basés sur un premier et un deuxième signal d'émission présentant des sous-porteuses d'amplitude zéro.

7. Appareil de réception (100) selon l'une des revendications 1 à 6, adapté pour détecter une interférence à bande étroite dans les signaux de réception OFDM.

8. Appareil de réception (100) selon l'une des revendications 1 à 7, comprenant par ailleurs un moyen destiné à synchroniser dans le temps sur le premier ou le deuxième signal de réception composé à sous-porteuses annulées.

9. Appareil de réception (100) selon l'une des revendications 1 à 8, comprenant par ailleurs un moyen destiné à estimer un décalage de fréquence sur base des premier ou deuxième signaux de réception composés à sous-porteuses annulées.

10. Appareil de réception (100) selon l'une des revendications 1 à 9, dans lequel le moyen (130) destiné à annuler des sous-porteuses est par ailleurs adapté pour annuler des sous-porteuses dans une plage de fréquences autour d'une fréquence d'une sous-porteuse dont l'intensité est au-dessus du seuil de détection.

11. Appareil de réception (100) selon la revendication 10, dans lequel la plage de fréquences s'étend sur deux ou plusieurs sous-porteuses consécutives.

12. Procédé pour détecter une interférence à bande étroite dans un signal de réception à porteuses multiples, le signal de réception à porteuses multiples étant composé d'une pluralité de sous-porteuses et présentant une structure de trames séquentielles dans le temps, comprenant les étapes suivantes consistant à:

transformer un premier signal de réception composé, qui est basé sur un premier signal d'émission présentant des sous-porteuses d'amplitude prédéfinie, au domaine de la fréquence, pour obtenir un premier spectre de signal de réception composé et à transformer un deuxième signal de réception composé, qui est basé sur le premier signal d'émission, au domaine de la fréquence, pour obtenir un deuxième spectre de signal de réception composé, les premier et deuxième signaux de réception composés se composant de signaux de réception à porteuses multiples;

détecter une interférence à bande étroite en comparant une différence spectrale entre le premier spectre de signal de réception composé et le deuxième spectre de signal de réception composé ou une version décalée du deuxième spectre de signal de réception composé avec un seuil de détection; et

annuler une sous-porteuse dans le premier ou le deuxième spectre de signal de réception composé si l'intensité de la sous-porteuse de la différence spectrale est au-dessus du seuil de détection.

13. Programme d'ordinateur ayant un code de programme pour réaliser le procédé selon la revendication 12 lorsque le programme d'ordinateur est exécuté sur un ordinateur.

14. Appareil de transmission (200) pour transmettre des signaux à porteuses multiples composés d'une pluralité de sous-porteuses, comprenant:

un moyen (210) destiné à composer un premier spectre présentant des sous-porteuses d'amplitude prédéfinie et à composer un deuxième spectre qui est une version décalée ou cycliquement décalée du premier spectre;

un moyen (220) destiné à transformer le premier et le deuxième spectre au domaine du temps, pour obtenir un premier et un deuxième signal; et

un moyen (230) destiné à transmettre le premier et le deuxième signal.

15. Appareil de transmission (200) selon la revendication 14, dans lequel le moyen (210) destiné à composer est adapté pour composer des signaux OFDM, le moyen (220) destiné à transformer est adapté pour transformer les signaux OFDM, et le moyen (230) destiné à transmettre est adapté pour transmettre des signaux OFDM.

16. Appareil de transmission (200) selon l'une des revendications 13 à 15, dans lequel le moyen (230) destiné à transmettre une sous-porteuse est adapté pour transmettre les signaux dans une structure de trames séquentielles et dans lequel les premier et deuxième signaux de détection d'interférence ont chacun une durée d'une trame et demie dans le temps.

17. Appareil de transmission (200) selon l'une des revendications 13 à 16, dans lequel les premier et deuxième spectres comprennent des sous-porteuses d'amplitude zéro.

18. Procédé pour transmettre des signaux à porteuses multiples composés d'une pluralité de sous-porteuses, comprenant les étapes consistant à:

composer un premier spectre présentant des sous-porteuses d'amplitude prédéfinie et composer un deuxième spectre qui est une version décalée ou cycliquement décalée du premier spectre;

transformer le premier et le deuxième spectre au domaine du temps, pour obtenir un premier et un deuxième signal; et

transmettre le premier et le deuxième signal.

19. Programme d'ordinateur ayant un code de programme pour réaliser le procédé selon la revendication 18 lorsque le code de programme est exécuté sur un ordinateur.

20. Système de communication comprenant un appareil de réception (100) selon l'une des revendications 1 à 11, et un appareil de transmission (200) selon l'une des revendications 14 à 17.

## FIG 1a

| means for transforming | means for detecting | means for cancelling |
|:---:|:---:|:---:|

⌐110    ⌐120    ⌐130

_100_

## FIG 1b

| means for composing | means for transforming | means for transmitting |
|:---:|:---:|:---:|

⌐210    ⌐220    ⌐230

_200_

## FIG 1c

Received signal → Frequency domain NBI cancellation —155

NBI estimation —150

100

Timing and frequency estimation (S&C) —160

Timing and frequency correction —145

Data detection —175

Channel estimation —170

## FIG 2

250

260 270

B B1

3/2 N

FIG 3

# FIG 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200415946 A1

**Non-patent literature cited in the description**

- **ZHANG D. et al.** *Receiver window design for narrowband interference suppression in IEEE 802.11a system,* 2004

- *The 2004 joint conference of the 10th Asia Pacific conference in Beijing,* August 2004, 839-842